Europäisches Patentamt

European Patent Office

Office européen des brevets

(11) Veröffentlichungsnummer : **0 537 615 B1**

# (12) EUROPÄISCHE PATENTSCHRIFT

(45) Veröffentlichungstag der Patentschrift :
**16.08.95 Patentblatt 95/33**

(51) Int. Cl.$^6$ : **G21C 19/07**

(21) Anmeldenummer : **92117134.4**

(22) Anmeldetag : **07.10.92**

(54) **Lagergestell für Kernreaktor-Brennelemente.**

(30) Priorität : **16.10.91 DE 4134246**

(43) Veröffentlichungstag der Anmeldung :
**21.04.93 Patentblatt 93/16**

(45) Bekanntmachung des Hinweises auf die
Patenterteilung :
**16.08.95 Patentblatt 95/33**

(84) Benannte Vertragsstaaten :
**AT CH DE ES FR LI SE**

(56) Entgegenhaltungen :
**EP-A- 0 220 931**
**DE-A- 3 519 789**
**US-A- 4 024 406**
**US-A- 4 119 859**
**US-A- 4 143 276**

(73) Patentinhaber : **SIEMENS
AKTIENGESELLSCHAFT
Wittelsbacherplatz 2
D-80333 München (DE)**

(72) Erfinder : **Schabert, Hans-Peter
Friedrich-Bauer-Strasse 28
W-8520 Erlangen (DE)**
Erfinder : **Horstmann, Wilfried
Bachfeldstrasse 12
W-8520 Erlangen (DE)**
Erfinder : **Wasinger, Karl
Hermann-Hesse-Strasse 35
W-6052 Mühlheim a. M. (DE)**

EP 0 537 615 B1

## Beschreibung

Die Erfindung bezieht sich auf ein Lagergestell für Kernreaktor-Brennelemente.

Zur Zwischenlagerung von abgebrannten Brennelementen eines Druck- oder Siedewasserreaktors ist es aus technischen und ökonomischen Gründen erforderlich, den innerhalb der Brennelementlagerbecken vorhandenen Lagerraum möglichst optimal zu nutzen. Das Lagergestell soll dabei bei ausreichender mechanischer Stabilität und neutronenabsorbierenden Eigenschaften einen möglichst geringen eigenen Platzbedarf haben, um eine hohe Beladungsdichte für abgebrannte Brennelemente zu ermöglichen.

Aus der US-A-4 119 859 ist ein Lagergestell für abgebrannte Brennelemente bekannt, bei dem nur für jede zweite Position im Gestell ein Absorberschacht vorgesehen ist. Die Absorberschächte sind diagonal einander gegenüberliegend angeordnet und bilden ein schachbrettartiges Muster, so daß jeweils zwei eine gemeinsame Längskante bildende Seitenwände eines Absorberschachtes zwei ebenfalls eine gemeinsame Längskante bildenden Seitenwänden eines benachbarten Absorberschachtes zugeordnet sind. Die Absorberschächte sind untereinander im Bereich ihrer jeweils aneinandergrenzenden Längskanten mit Blechstreifen oder Blechwinkeln verbunden. Durch die Verwendung von Blechstreifen oder Blechwinkeln anstelle von kreuzförmigen Verbindungselementen wird bei geeigneter Wahl ihrer geometrischen Anordnung die schrittweise Montage des Lagergestells erleichtert, da die Verschweißung der Verbindungselemente mit den Seitenwänden jeweils von einer in der gesamten Höhe des Absorberschachtes frei zugänglichen Seite aus erfolgen kann. Durch diese Blechstreifen oder Blechwinkel, die über eine größere Höhe der Absorberschächte verteilt sind, werden insbesondere vertikale Schubkräfte von Schacht zu Schacht übertragen, so daß die Durchbiegung des gesamten Gestells unter dem Eigengewicht der Schächte verringert ist. Zur Aufnahme horizontaler Querkräfte im oberen Teil des Lagergestells ist zusätzlich ein ebenfalls im oberen Teil des Lagergestells angeordnetes horizontales Stützgitter vorgesehen, das aus miteinander verzahnten Grobblechstreifen aufgebaut ist. Nur jeder zweite Gitterplatz dieses Stützgitters ist mit einem Absorberschacht versehen. Durch die Dicke der Grobblechstreifen dieses Stützgitters ergibt sich eine zueinander versetzte Anordnung der Absorberschächte, so daß die benachbarten, zueinander parallelen Seitenwände einander gegenüberliegende Absorberschächte nicht mehr miteinander fluchten. Die lichte Weite des Stützgitters muß außerdem entsprechend der Außenabmessungen der Absorberschächte bemessen sein, so daß sich für die nicht mit Absorberschächten besetzten Zwischenpositionen ein größerer Abstand zwischen Brennelement und den Absorberwänden der ihn umgebenden Absorberschächte ergibt. Dies hat zur Folge, daß der vorhandene Lagerraum nicht optimal ausgenutzt werden kann und die freistehenden Brennelemente mit zu großem seitlichen Spiel in der Zwischenposition gelagert sind. Außerdem bilden sowohl die von den Blechwinkeln oder Blechstreifen als auch insbesondere vom Stützgitter gebildeten Vorsprünge ein Hindernis beim Be- oder Entladen der Absorberschächte bzw. der nicht mit Absorberschächten versehenen Zwischenpositionen des Stützgitters mit Brennelementen, und es besteht die Gefahr, daß sich Brennelemente beim Ein- oder Ausfahren in das Lagergestell verhaken können.

Der Erfindung liegt nun die Aufgabe zugrunde, ein Brennelementlagergestell anzugeben, bei dem trotz erleichterter Montage des Gestells eine hohe Stabilität des gesamten Schacht-Verbandes gewährleistet ist. Darüber hinaus ist die Aufgabe dahin gerichtet, ein Lagergestell zu schaffen, durch dessen Aufbau eine hohe Beladungsdichte auch unter Ausnutzung von Zwischenpositionen ermöglicht ist. Eine Unteraufgabe der Erfindung besteht darin, das Brennelementlagergestell so auszubilden, daß ein Verhaken der Brennelemente in den Schächten und in den Zwischenpositionen beim Ent- oder Beladen praktisch ausgeschlossen werden kann.

Die genannten Aufgaben werden gelöst mit einem Lagergestell für Kernreaktor-Brennelemente, das folgende Merkmale umfaßt:

a) Auf einer Grundplatte sind mehrere Schächte mit im wesentlichen rechteckigem Querschnitt befestigt;

b) die Schächte stehen aufrecht auf der Grundplatte und sind schachbrettartig jeweils diagonal einander gegenüberliegend angeordnet,

c) wenigstens ein Teil der diagonal einander gegenüberliegenden Schächte ist jeweils entlang deren mit Versatz aneinandergrenzenden Längskanten durch wenigstens zwei Verbindungselemente, welche einen durch Versatz gebildeten Spalt überbrücken, miteinander verbunden, wobei dem jeweiligen Längskantenpaar:

d) wenigstens ein erstes Verbindungselement mit einer hohen Steifigkeit jeweils in einer ersten Richtung parallel zur Grundplatte und

e) wenigstens ein zweites Verbindungselement mit einer hohen Steifigkeit jeweils in einer zweiten Richtung parallel zur Grundplatte zugeordnet ist.

Da für die Verbindung zweier Schächte entlang deren aneinandergrenzenden Längskanten jeweils wenigstens zwei Verbindungselemente vorgesehen sind, die eine hohe Steifigkeit in zueinander unterschiedlichen Richtungen parallel zur Grundplatte haben, können auf das Lagergestell wirkende innere Querkräfte aufgenommen werden, ohne daß ein zusätzliches Stützgitter im oberen Bereich des Lagergestells erforderlich ist. Durch das fehlende Stützgitter ist außerdem eine Beladung der nicht mit Schächten versehenen Zwischenräume des Lagergestells möglich, so daß Zwischenpositionen oder Zwischenplätze für Brennelemente gebildet werden.

Hohe Steifigkeit wird immer dann erreicht, wenn die horizontale Querkraft ganz oder nahezu parallel zu einer der Flachseiten eines Verbindungselements wirkt, weil dann im Verbindungselement hauptsächlich Längsspannungen entstehen. Diesen setzt auch dünnwandiges Blech einen hohen Verformungswiderstand entgegen. Quer zu den Flachseiten eines dünnwandigen Bleches wirkende Kräfte würden hohe Biegespannungen in den Schweißnähten und eine stark vergrößerte Nachgiebigkeit in dieser Richtung bewirken. Die Aufnahme dieser Kräfte erfolgt dann durch das für jede Schachtverbindung vorgesehene zweite Verbindungselement, beispielsweise ebenfalls ein dünnwandiges Blech, das unter einem Winkel zum beispielsweise ebenfalls aus einem dünnwandigen Blech bestehenden ersten Verbindungselement angeordnet ist.

Eine besonders hohe Aufnahmefähigkeit des Lagergestells gegen Querkräfte aus beliebigen Richtungen kann dadurch erzielt werden, daß zwischen der ersten Richtung und der zweiten Richtung ein Winkel zwischen 70° und 90° vorgesehen ist.

Vorzugsweise sind im unteren Bereich der Schächte erste Verbindungselemente vorgesehen, die jeweils mit einer Seitenwand eines Schachtes und mit einer ihr zugeordneten Seitenwand eines gegenüberliegenden Schachtes verschweißt sind, und im oberen Bereich der Schächte zweite Verbindungselemente vorgesehen, die wenigstens mit den anderen einander zugeordneten Seitenwänden der einander gegenüberliegenden Schächte verschweißt sind.

Dadurch ist im unteren Bereich der Schächte eine Anordnung der ersten Verbindungselemente möglich, die bei der Montage des Lagergestells, bei der nacheinander die Schächte untereinander über die Verbindungselemente verschweißt werden, eine gute Zugänglichkeit der Schweißnähte gewährleistet. Die im oberen Bereich angeordneten zweiten Verbindungselemente können dann nachträglich von der Oberseite des Lagergestells ausgehend eingeschweißt werden.

Die Länge des mit ersten Verbindungselementen versehenen unteren Bereiches beträgt vorzugsweise wenigstens drei Viertel der gesamten Höhe der Schächte. Im unteren Bereich der Schächte können dabei sowohl ein einteiliges erstes Verbindungselement, das über seine gesamte Länge mit den Seitenwänden der benachbarten Schächte ohne oder mit Unterbrechungen verschweißt ist, oder mehrere im Abstand zueinander angeordnete erste Verbindungselemente vorgesehen sein.

Als erste Verbindungselemente sind sowohl Blechstreifen als auch Blechwinkel geeignet, die jeweils nur eine Seitenwand eines Schachtes mit einer Seitenwand eines benachbarten Schachtes verbinden und so eine freie Zugänglichkeit bei der Montage des Lagergestells ermöglichen.

Insbesondere sind als erste Verbindungselemente Blechstreifen vorgesehen, die zwischen den Längskanten der einander gegenüberliegenden Schächte angeordnet und mit deren einander parallelen Seitenwänden verschweißt sind.

In einer bevorzugten Ausführungsform erstrecken sich die ersten Verbindungselemente über die gesamte Höhe der Schächte und sind im oberen Bereich mit einem Schlitz für die Aufnahme eines zweiten ebenfalls streifenförmigen Verbindungselementes versehen.

Die Breite dieser Blechstreifen beträgt vorzugsweise zwischen 10 % und 30 % der Seitenlänge der Schächte.

In einer weiteren bevorzugten Ausführungsform der Erfindung sind zweite Verbindungselemente mit kreuzförmigem Profil vorgesehen, die mit jeder der einander zugeordneten Seitenwände verschweißt sind.

Um ein Verhaken der Brennelemente beim Aus- oder Einfahren aus den Schächten zu verhindern, sind Verbindungselemente vorgesehen, die an ihren in einer Richtung von außen axial einwärts in das Innere der Schächte hineinragenden Enden verjüngt zulaufen.

In einer bevorzugten Ausführungsform des Lagergestells gemäß der Erfindung bestehen die Wände der Schächte aus austenitischem Borstahl mit einem Borgehalt bis 2 %, vorzugsweise zwischen 1 % und 1,6 %, und die Verbindungselemente aus weichem austenitischen Stahl, dessen Kohlenstoffgehalt kleiner als 0,1 %, vorzugsweise kleiner als 0,04 %, beträgt. Durch diese Maßnahme ist gewährleistet, daß sich bei Einwirken von extremen äußeren Kräften auf das Lagergestell die Borstahlschächte praktisch nicht verformen, da die äußeren Kräfte notfalls durch ein Fließen der Verbindungselemente aufgenommen werden. Um ein Verbiegen der Borstahlschächte sicher zu vermeiden, sind außerdem insbesondere Verbindungselemente vorgesehen, deren Wandstärke niedriger ist als die Wandstärke der Seitenwände der Schächte.

In einer weiteren bevorzugten Ausführungsform sind die Seitenwände der Schächte nach außen mit Sicken versehen. Durch die Maßnahme kann erreicht werden, daß die lichte Weite der von Schächten umgebenen Zwischenräume mit der lichten Weite der Schächte praktisch übereinstimmt. Auf diese Weise wird eine Beladung des Lagergestells ermöglicht, bei der die Brennelemente in allen Positionen im Lagergestell nahezu den gleichen Abstand von den neutronenabsorbierenden Seitenwänden der Schächte haben.

Vorzugsweise sind die streifenförmigen ersten Verbindungselemente jeweils parallel zum nächstgelegenen Teil der Außenwand des Lagergestells angeordnet. Dadurch ergibt sich ein zwiebelschalenähnliches Muster mit einer hohen Steifigkeit parallel zur jeweils nächstgelegenen Außenwand des Lagergestells.

Die Flachseiten der Verbindungselemente sind vorzugsweise unter einem spitzen Winkel zu der mit ihnen jeweils an der Außenwand verschweißten Seitenwand angeordnet. Dadurch wird bei gesickten Schächten eine versatzfreie Anordnung der Schächte im Gestell ermöglicht.

In einer vorteilhaften Ausführungsform sind die Schächte jeweils mit einer Flanschplatte verschweißt, die mit der Grundplatte verschraubt ist. Durch diese Maßnahme werden fertigungstechnisch aufwendige Direktschweißnähte zwischen den Seitenwänden der Schächte und der Grundplatte vermieden. Die Flanschplatte läßt sich aufgrund der geringeren Wandstärkenunterschiede zwischen ihr und den Seitenwänden der Schächte technisch zuverlässiger und mit geringer Neigung zu Schweißrissen mit den Seitenwänden der Schächte verschweißen. Außerdem können in dieser Ausführungsform alle vier Seitenwände der Schächte mit der Flanschplatte verschweißt und damit kraftschlüssig mit der Grundplatte verbunden werden. Dies ist bei der Montage eines Lagergestells bei Direktschweißung an die Grundplatte nicht möglich, weil beim Aufbau des Verbandes für die meisten der Schächte nur drei von vier Seitenflächen für eine Direktschweißung zugänglich sind.

In einer weiteren vorteilhaften Ausgestaltung der Erfindung sind zur Lagerung des Lagergestells Füße vorgesehen, die mit der Grundplatte oder mit an der Grundplatte befestigten Verstärkungsplatten verschraubt sind. Für die Verschraubung dieser Füße ist vorzugsweise eine Gewindebohrung mit einem Grobgewinde vorgesehen, dessen axiales Spiel mindestens 0,5 mm, vorzugsweise 1 bis 2 mm, beträgt. Das Grobgewinde bewirkt eine gelenkartige Aufnahme der Füße, so daß ein flächiges Aufliegen aller Füße auf dem Boden des Brennelementlagerbeckens gewährleistet ist. Das Lagergestell steht dabei frei und ohne seitliche Fixierung auf dem Boden des Lagerbeckens.

Der jeweilige Fuß weist vorzugsweise einen Gewindeschaft und eine im Vergleich dazu verbreiterte Basis auf und stützt sich mit seiner Basis auf einer Fußplatte ab, wobei zwischen der Fußplatte und der Verstärkungsplatte oder der Grundplatte Spanneinrichtungen zum Verspannen der Füße im Grobgewinde nach dem Justieren der horizontalen Lage der Grundplatte angeordnet sind. Insbesondere ist das Verhältnis zwischen halber Basisbreite des Fußes und Abstand zwischen der Fußplatte und dem Mittelpunkt der Gewindebohrung größer als der Haftreibungskoeffizient zwischen Fußplatte und dem Boden des Lagerbeckens. Dadurch wird erreicht, daß bei auf das Lagergestell beispielsweise bei Erdbeben einwirkenden Querkräften das gesamte Lagergestell entlang dem Beckenboden gleiten kann und ein Umkippen der Füße verhindert ist.

Zur weiteren Erläuterung der Erfindung wird auf die Ausführungsbeispiele der Zeichnung verwiesen, in deren

| Figur 1 | ein Brennelement-Lagergestell gemäß der Erfindung in einer Seitenansicht veranschaulicht ist. |
| Figur 2 | zeigt einen Ausschnitt des Lagergestells im Bereich einer seiner Ecken in einer Draufsicht. Anhand der schematischen Darstellungen gemäß |
| Figuren 3 und 4 | ist die geometrische Anordnung der ersten und zweiten Verbindungselemente im Lagergestell veranschaulicht. |
| In den Figuren 5 und 6 | ist jeweils ein oberer Teil eines Lagergestells mit unterschiedlichen Verbindungselementen in einem Querschnitt dargestellt. |
| Figur 7 | zeigt eine besonders vorteilhafte Ausführung einer Verbindung zwischen zwei benachbarten Schächten im oberen Bereich des Lagergestells und eine vergrößerte Detaildarstellung des Versatzes zwischen den Schächten und in |
| Figur 8 | ist ein Stützfuß zur Lagerung des Lagergestells auf dem Beckenboden in einem vertikalen Schnitt genauer dargestellt. |

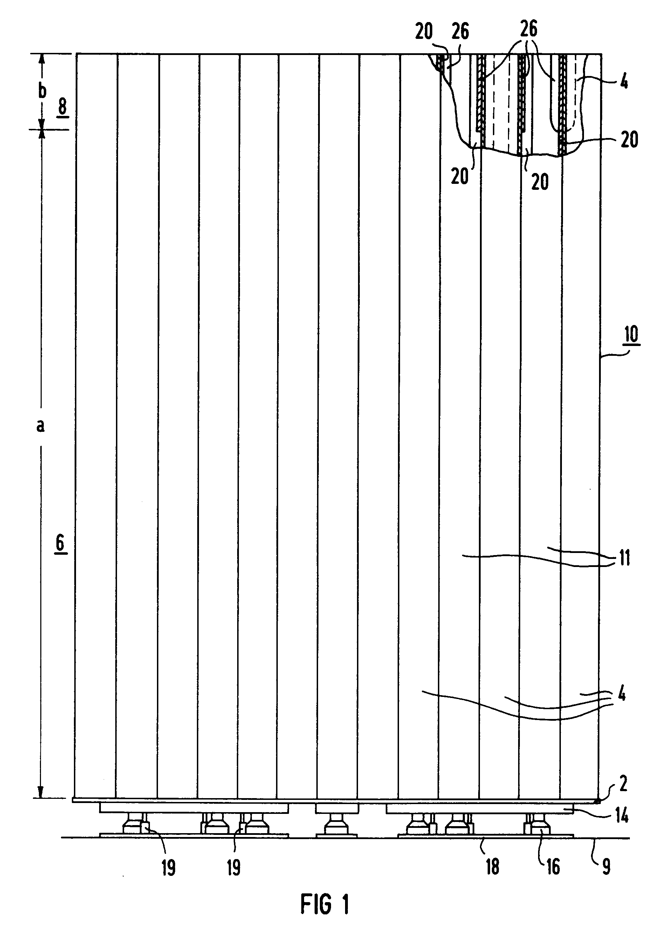

Gemäß Figur 1 sind in einem Lagergestell für Kernreaktor-Brennelemente mehrere Schächte 4 aufrecht stehend auf einer Grundplatte 2 befestigt. Die Schächte 4 sind auf der Grundplatte 2 schachbrettartig angeordnet, so daß die in der Figur in Seitenansicht erkennbare Außenwand 10 des Lagergestells abwechselnd durch Seitenwände der Schächte 4 und durch auf diese Seitenwände aufgeschweißte Randbleche 11 gebildet wird.

An der Grundplatte 2 sind Verstärkungsplatten 14 angeordnet, die mit Füßen 16 versehen sind. Die Füße 16 ruhen über Fußplatten 18 auf dem Boden 9 des in der Figur nicht näher dargestellten Brennelementlagerbeckens. Die Füße 16 sind in die Verstärkungsplatten 14 mit einem Grobgewinde eingeschraubt, dessen Gewindesteigung 6 mm beträgt. Zwischen der Verstärkungsplatte 14 und der Fußplatte 18 sind Spannbolzen 19 zum Verspannen der Füße 16 im Grobgewinde vorgesehen. Das Lagergestell ruht ohne seitliche Fixierung frei auf dem Boden 9 des Brennelementlagerbeckens.

Die Schächte 4 sind untereinander mit ersten und zweiten Verbindungselementen 20 bzw. 26 verbunden.

**4**

Im oberen rechten Bereich der Figur ist der Blick auf die hinter den Randblechen 11 liegenden Seitenwände der in der zweiten Reihe angeordneten Schächte 4 freigelegt. Die ersten Verbindungselemente 20 und die zweiten Verbindungselemente 26 sind abwechselnd in einer Draufsicht auf ihre Flachseite bzw. in einem Schnitt ihrer Schmalseite zu erkennen, wobei im ersten Fall jeweils eine Hälfte durch einen davorliegenden Schacht 4 verdeckt wird.

Die unteren ersten Verbindungselemente 20 erstrecken sich im Beispiel der Figur über die gesamte Höhe a + b der Schächte 4, das heißt über einen unteren Bereich 6 und über einen oberen Bereich 8. Um eine leichte Schweißbarkeit der zweiten Verbindungselemente 26 zu ermöglichen, erstrecken sich diese nur im oberen Bereich 8 auf einer Länge b, die weniger als 25 % der gesamten Höhe a + b der Schächte 4 beträgt. Bei einer Gesamthöhe der Schächte von etwa 4,5 m sind insbesondere zweite Verbindungselemente 26 vorgesehen, deren Länge zwischen 300 mm und 500 mm beträgt.

Die Schächte 4 bestehen aus Borstahl mit einem Borgehalt zwischen 1 % und 1,6 %, während für die Verbindungselemente duktiler austenitischer Stahl mit niedrigem Kohlenstoffgehalt vorgesehen ist.

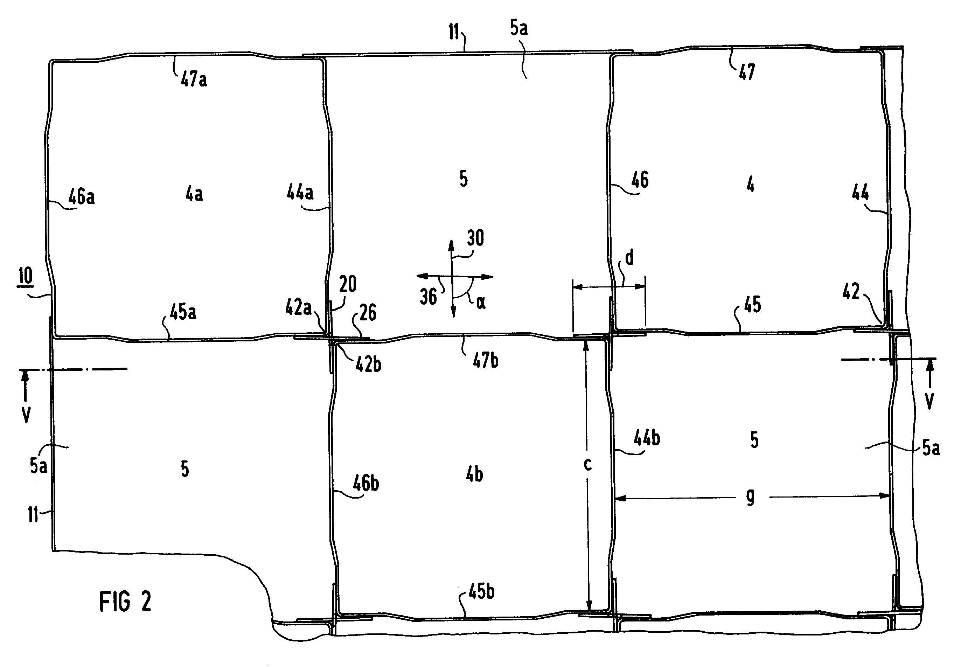

Entsprechend Figur 2 sind die Schächte 4 jeweils diagonal einander gegenüberliegend angeordnet, so daß sich ein schachbrettartiges Muster ergibt. In der Figur ist ein Randbereich des Lagergestells an einer Ecke dargestellt. Im Randbereich des Lagergestells umgeben drei Schächte 4 einen Zwischenraum 5a, der nach außen durch ein Randblech 11 verschlossen ist und zusätzlich zu den Schächten 4 zur Aufnahme eines (nicht dargestellten) Brennelementes in einer Zwischenposition 5 dient. Im inneren Bereich des Lagergestells umgeben vier Schächte 4 einen Zwischenraum 5a mit Zwischenposition 5. Die Seitenwände 44 bis 47, 44a bis 47a, 44b bis 47b, der Schächte 4, 4a, 4b sind jeweils nach außen gesickt, so daß die lichte Weite c der Schächte mit der lichten Weite g der Zwischenräume 5a annähernd übereinstimmt. Sie beträgt etwa 220 mm.

Die Schächte und Seitenwände sind generell mit 4 bzw. 44 bis 47 und speziell mit 4a, 4b bzw. 44a - 47a, 44b - 47b bezeichnet. Die Schächte 4 sind mit den ihnen jeweils gegenüberliegenden Schächten 4 über erste und zweite Verbindungselemente 20 und 26 verbunden. Jeweils zwei eine gemeinsame Längskante 42a bildende Seitenwände 44a und 45a eines Schachtes 4a sind zwei eine gemeinsame Längskante 42b bildenden Seitenwänden 47b und 46b des diagonal gegenüberliegenden Schachtes 4b zugeordnet. Das erste Verbindungselement 20 hat die Gestalt eines Blechstreifens und verbindet die Seitenwand 44a des Schachtes 4a mit der zu ihr annähernd parallelen Seitenwand 46b des Schachtes 4b. Das zweite ebenfalls streifenförmige Verbindungselement 26 verbindet die Seitenwand 45a des Schachtes 4a mit der Seitenwand 47b des Schachtes 4b.

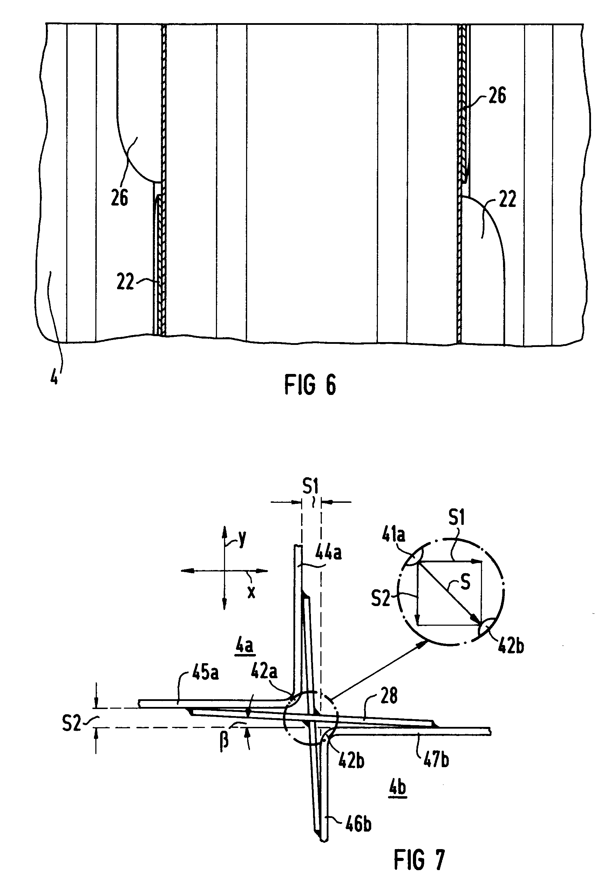

Das erste Verbindungselement 20 hat eine hohe Steifigkeit in den durch den Doppelpfeil 30 angedeuteten, parallel zur Flachseite des ersten Verbindungselements 20 verlaufenden Richtungen. Das zweite Verbindungselement 26 hat eine hohe Steifigkeit in annähernd senkrecht zur Richtung 30 verlaufenden Richtungen 36. Der etwa rechte Winkel $\alpha$ zwischen diese beiden Richtungen 30 und 36 beträgt vorzugsweise zwischen 70° und 90°. In der Figur ist zu erkennen, daß die ersten und zweiten streifenförmigen Verbindungselemente 20 bzw. 26 nicht exakt parallel oder senkrecht zur Außenwand 10 und den Seitenwänden 44a, 45a, 46b und 47b verlaufen, sondern jeweils unter einem spitzen Winkel $\beta$ (Figur 7) auf den Seitenflächen 44a, 45a, 46b und 47b aufliegen. Dadurch wird der im Bereich der Längskanten 42a und 42b erforderliche Versatz S1 in Richtung x und S2 in Richtung y zwischen den Schächten 4a und 4b ausgeglichen. Die Richtung des Versatzes S1 ist parallel zur Achse x und des Versatzes S2 parallel zur Achse y eines rechtwinkligen Achsenkreuzes x-y, das mit seinen beiden Achsen parallel zu den Wänden 44,46 und 45,47 der Schächte 4 ausgerichtet ist. Durch die nach außen gesickten Seitenflächen 44a, b bis 47 a, b der Schächte 4a und 4b wird dieser Versatz S1, S2 wieder aufgehoben, so daß die lichte Weite c der Schächte mit der lichten Weite g des Zwischenraums 5a oder der Zwischenposition 5 nahezu übereinstimmt.

Durch die nach außen gesickten Seitenflächen 44 bis 47 der Schächte 4 sind diese Seitenwände 44 bis 47 im Bereich ihrer Längskanten 42 vom Mittelpunkt der von ihnen umgebenen Lehrposition 5 aus betrachtet zurückversetzt, so daß die Gefahr, daß die dort angeschweißten Verbindungselemente sich beim Be- und Entladen der Schächte 4 oder der Zwischenplätze 5 mit einem Brennelement verhaken können, praktisch ausgeschlossen ist. In Figur 7 ist der Versatz S1, S2 in einem Ortsvektor-Diagramm vergrößert herausgezeichnet, wobei sich der resultierende Ortsvektor S = Abstand der oder Spalt zwischen den beiden Längskanten 42a, 42b ergibt.

Die Breite d der streifenförmigen ersten und zweiten Verbindungselemente 20 bzw. 26 beträgt etwa 10 bis 30 % der lichten Weite c eines Schachtes 4, im Beispiel 60 mm. Die Wandstärke der Verbindungselemente 20, 26 beträgt vorzugsweise 50 % bis 90 % der Wanddicke der Schächte 4. Im Ausführungsbeispiel der Figur ist bei einer Wanddicke der Schächte 4 von 2 mm eine Wandstärke der Verbindungselemente 20, 26 von etwa 1,5 mm vorgesehen.

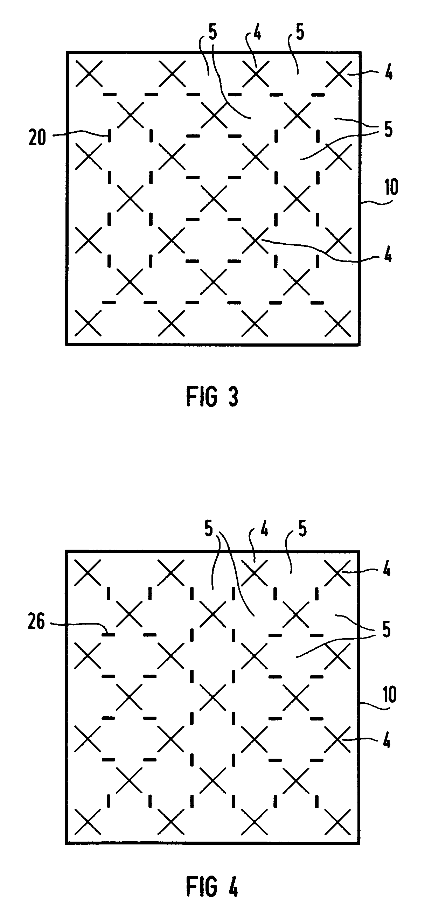

In Figur 3 ist eine bevorzugte Anordnung der ersten streifenförmigen Verbindungselemente 20 dargestellt. Durch ein Kreuz sind in der Figur die mit Schächten 4 versehenen Positionen im Lagergestell angedeutet. Die ersten Verbindungselemente 20 sind mit ihrer Flachseite jeweils parallel zum nächstgelegenen Teil der Außenwand 10 des Lagergestells angeordnet, so daß sich ein Muster ergibt, das in seinem Aufbau einer Zwiebelschale ähnelt.

Figur 4 zeigt die Anordnung der zweiten Verbindungselemente im oberen Bereich des Lagergestells. Den Figuren ist zu entnehmen, daß die zweiten streifenförmigen Verbindungselemente annähernd senkrecht zur jeweils nächstgelegenen Teil der Außenwand 10 des Lagergestells angeordnet sind. Für die Verbindung zweier diagonal einander gegenüberliegender Schächte sind somit für jede aneinandergrenzende Längskante wenigstens zwei Verbindungselemente vorgesehen, die eine hohe Steifigkeit in zueinander nahezu orthogonalen Richtungen aufweisen. Durch diesen Aufbau wird eine hohe Steifigkeit des Lagergestells gegenüber Belastungen in beliebigen Richtungen parallel zur Grundplatte bewirkt.

Wird das Lagergestell in einer Zone verringerter Erdbebenbelastung eingesetzt, ist unter Umständen zur Verbindung der diagonal gegenüberliegenden Schächte 4 nur für einen Teil dieser Verbindungen die Verwendung von ersten und zweiten Verbindungselementen 20 bzw. 26 erforderlich.

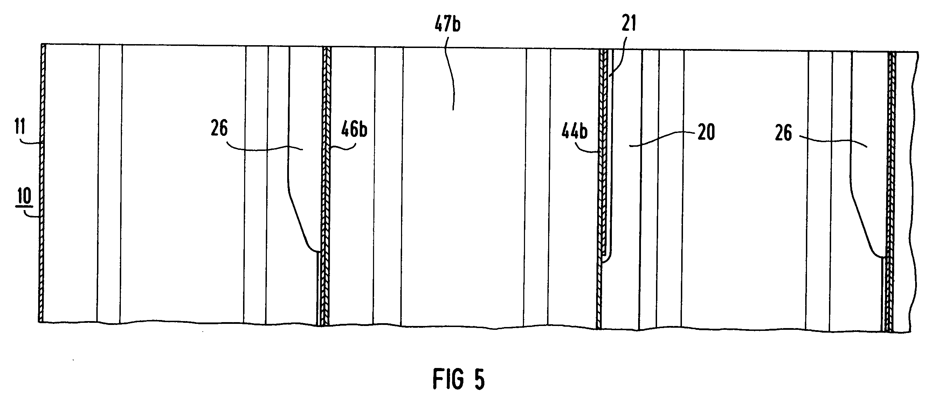

In Figur 5 ist zu erkennen, daß sich die ersten Verbindungselemente 20 bis an die Oberkante der Schächte 4 erstrecken. Die ersten Verbindungselemente 20 sind in ihrem oberen Bereich mit einer Nut oder einem Einschnitt 21 für die Aufnahme des zweiten Verbindungselements 26 versehen. Die zweiten Verbindungselemente 26 sind an ihrem von der Stirnfläche der Schächte 4 abgewandten Ende verjüngt oder spitz zulaufend geformt, um ein Verhaken mit den Brennelementen beim Entladen zu vermeiden.

Entsprechend Figur 6 und abweichend von der Ausbildung nach Figur 5 sind erste Verbindungselemente 22 vorgesehen, die sich nur im unteren Bereich 6 der Schächte 4 erstrecken und nicht bis an deren Oberkante heranragen. Diese ersten Verbindungselemente 22 sind ebenfallsfalls an ihrem freien, in das Schachtinnere hineinragenden Ende spitz oder verjüngt zulaufend geformt, um zu verhindern, daß sie sich mit den Brennelementen beim Beladen mit den ersten Verbindungselementen 22 verhaken. Die Ausbildung der zweiten Verbindungselemente 26 ist prinzipiell so wie in Figur 5 dargestellt.

Figur 7 dient nicht nur zur Erläuterung des Versatzes S1, S2, sondern zeigt eine vorteilhafte Ausgestaltung mit kreuzförmigen zweiten Verbindungselementen 28, die mit den einander zugewandten Seitenflächen 44a, 45a und 46b, 47b der Schächte 4a bzw. 4b verschweißt sind. In der Figur ist zu erkennen, daß auch in diesem Ausführungsbeispiel die jeweiligen Flachseiten des kreuzförmigen zweiten Verbindungselements 28 unter einem spitzen Winkel $\beta$ zu den Seitenflächen 44a, 45a, 46b und 47b der Schächte 4a bzw. 4b verlaufen.

Da die zweiten Verbindungselemente 28 nur im oberen Bereich des Lagergestells angeordnet sind, kann ihre Montage nachträglich von oben erfolgen. Die kreuzförmigen Verbindungselemente 28 können als separate Stücke mit Länge b (vgl. Figur 1) von oben her zwischen den Schächten 4 eingeschweißt werden. Sie können aber auch dadurch entstehen, daß die über die Höhe a + b durchlaufenden, oben gemäß Figur 5 geschlitzten ersten Verbindungselemente 20 mit den dort angeordneten zweiten Verbindungselementen 26 verschweißt werden, oder daß auf angeschlitzte erste Verbindungselemente mit Länge a + b kurze zweite Verbindungselemente in zwei längsgeteilten Hälften aufgeschweißt werden.

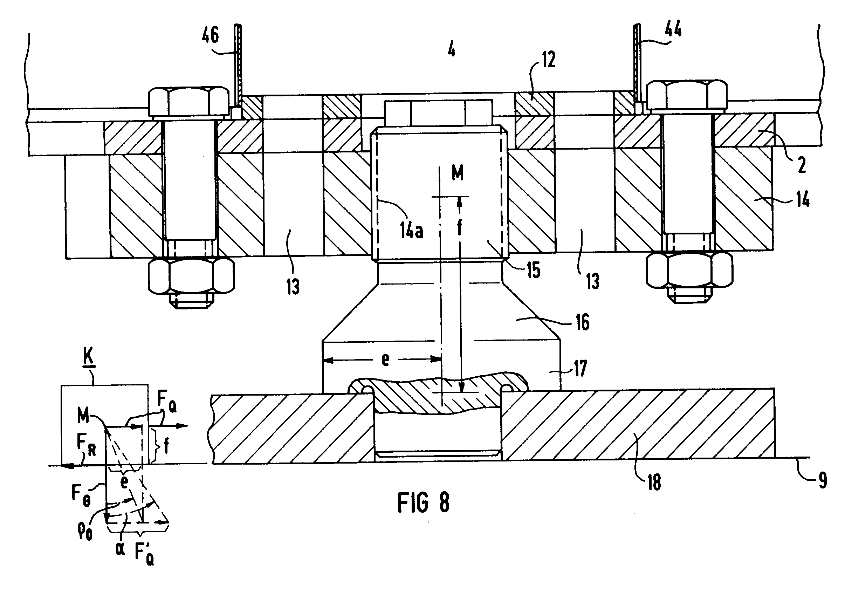

Gemäß Figur 8 ist die Grundplatte 2 mit der Verstärkungsplatte 14 verschraubt, welche eine Bohrung 14a mit Innengewinde aufweist. In diese ist der Fuß 16 mit einem Gewindeschaft 15 eingeschraubt ist. Für die Verschraubung 14a/15 ist ein Grobgewinde mit einem axialen Spiel von wenigstens 0,5 mm, vorzugsweise 1 bis 2 mm, vorgesehen. Der Fuß 16 ruht mit einer Basis 17, welche im Vergleich zum Gewindeschaft 15 verbreitert ist, auf der Fußplatte 18, die auf dem Boden 9 des Lagerbeckens aufliegt. Das Verhältnis zwischen der halben Basisbreite e und dem Abstand f zwischen der Auflagefläche des Fußes 16 und dem Mittelpunkt M der Gewindebohrung ist größer als der Haftreibungskoeffizient $\mu$ zwischen der Fußplatte 18 und dem Boden 9 des Lagerbeckens, um bei auf das Lagergestell wirkenden Querkräften ein Gleiten des gesamten Lagergestells auf dem Boden 9 des Beckens zu ermöglichen. Dadurch wird ein Kippen der Füsse 16 verhindert. Im linken Teil der Figur 8 ist zur Erläuterung der auftretenden Kräfte und Momente ein würfelförmiger Körper K, aufliegend auf dem Boden 9, dargestellt. Am Körper K greifen im Bereich seines Schwerpunkts M die Horizontalkraft $F_Q$ mit dem Hebelarm f und die Gewichtskraft $F_G$ mit dem Hebelarm e an. Die in der Ebene des Bodens 9 wirkende Reibungskraft $F_R$ ist der Horizontalkraft $F_Q$ entgegengerichtet und im Falle der Ruhe des Körpers K gilt $F_Q = F_R$. Das Kippmoment $N_Q$ ist definiert durch

$$N_Q = f \cdot F_Q \quad (1),$$

das Standmoment $N_G$ ist definiert durch

$$N_G = e \cdot F_G \quad (2).$$

Wenn kein Kippen auftreten soll, gilt

$$N_G > N_Q \quad (3),$$

d.h.

$$e \cdot F_G > f \cdot F_Q \quad (4)$$

Es gilt weiterhin

$$F_Q = \mu \cdot F_G \quad (5)$$

oder

$$\mu = \frac{F_Q}{F_G},$$

weil die Reibungskraft $F_R$ im betrachteten Grenzfall (Grenzwinkel $\rho_0$) gleich der Horizontalkraft $F_Q$ ist ($\mu$ = Reibungskoeffizient).

Für die Reibungskraft gilt die bekannte Beziehung:

$$F_R = \mu \cdot F_G \quad (6)$$

bzw.

$$\mu = \frac{F_R}{F_G}$$

Die Ungleichung (4) kann deshalb auch geschrieben werden:

$$eF_G > f \cdot \mu \cdot F_G \quad (7),$$

woraus sich als Voraussetzung für die Bedingung "kein Kippen des Körpers K" die weiter oben angegebene Beziehung

$$\frac{e}{f} > \mu \quad (8)$$

ergibt. Unter dieser Voraussetzung würde eine Vergrößerung von $F_Q$, z.B. auf den Wert $F'_Q$, zu einem Gleiten führen. Der Winkel $\alpha$, der zu $F'_Q$ bzw. zu der Resultierenden aus $F'_Q$ und $F_G$ gehört, ist größer als der Grenzwinkel $\rho_0$, was ebenfalls bedeutet, daß Gleiten und kein Kippen auftritt, denn $\tan \rho_0 = \mu < \tan \alpha$.

In der Figur 8 ist außerdem zu erkennen, daß die Seitenwände 44 und 46 sowie die in der Figur nicht sichtbaren Seitenwände 45 und 47 der Schächte 4 mit einer Flanschplatte 12 verschweißt sind, die durch in der Figur nicht dargestellte Schrauben an der Grundplatte 2 befestigt sind. Die Verstärkungsplatte 16, die Grundplatte 2 und die Flanschplatte 12 sind jeweils mit Kühlmittelbohrungen 13 versehen, durch die Kühlmittel zum Abführen der Nachzerfallswärme der Brennelemente abgeführt wird.

## Patentansprüche

1. Lagergestell für Kernreaktor-Brennelemente mit folgenden Merkmalen:

    a) Auf einer Grundplatte (2) sind mehrere Schächte (4) mit im wesentlichen rechteckigem Querschnitt befestigt;

    b) die Schächte (4) stehen aufrecht auf der Grundplatte (2) und sind schachbrettartig jeweils diagonal einander gegenüberliegend angeordnet,

    c) wenigstens ein Teil der diagonal einander gegenüberliegenden Schächte (4) ist jeweils entlang deren mit Versatz (S1, S2) aneinandergrenzenden Längskanten (42) durch wenigstens zwei Verbindungselemente (20, 26),welche einen durch den Versatz (S1, S2) gebildeten Spalt (S) überbrücken, miteinander verbunden, wobei dem jeweiligen Längskantenpaar (42a, 42b):

    d) wenigstens ein erstes Verbindungselement (20) mit einer hohen Steifigkeit jeweils in einer ersten Richtung (30 bzw. 36) parallel zur Grundplatte (2) und

    e) wenigstens ein zweites Verbindungselement (26) mit einer hohen Steifigkeit jeweils in einer zweiten Richtung (36 bzw. 30) parallel zur Grundplatte (2) zugeordnet ist.

2. Lagergestell nach Anspruch 1, **dadurch gekennzeichnet**, daß zwischen der ersten Richtung (30) und der zweiten Richtung (36) ein Winkel($\alpha$)zwischen 70° und 90° vorgesehen ist.

3. Lagergestell nach Anspruch 1 oder 2, **dadurch gekennzeichnet**, daß im unteren Bereich (6) der Schächte (4) erste Verbindungselemente (20) vorgesehen sind, die jeweils mit einer Seitenwand (44a) eines Schachtes (4a) und mit einer ihr zugeordneten Seitenwand (46b) eines gegenüberliegenden Schachtes (4b) verschweißt sind, und im oberen Bereich (8) der Schächte (4) zweite Verbindungselemente (26) vorgesehen sind, die wenigstens mit den anderen einander zugeordneten Seitenwänden (45a, 47b) der einander gegenüberliegenden Schächte (4a, 4b) verschweißt sind.

4. Lagergestell nach Anspruch 3, **dadurch gekennzeichnet**, daß die Länge (a) des mit ersten Verbindungselementen (20) versehenen unteren Bereichs (6) wenigstens drei Viertel der gesamten Höhe (a + b) der Schächte (4) beträgt.

5. Lagergestell nach Anspruch 3 oder 4, **dadurch gekennzeichnet**, daß als erste Verbindungselemente (20) Blechstreifen vorgesehen sind, die zwischen den Längskanten (42a, 42b) der einander gegenüberliegenden Schächte (4a, 4b) angeordnet und mit deren einander parallelen Seitenwänden (44a, 46b) verschweißt sind.

6. Lagergestell nach Anspruch 5, **dadurch gekennzeichnet**, daß sich die ersten Verbindungselemente (20) über die gesamte Höhe (a + b) der Schächte (4) erstrecken und im oberen Bereich (8) mit einem Schlitz (21) für die Aufnahme eines zweiten, ebenfalls streifenförmigen Verbindungselementes (26) versehen sind.

7. Lagergestell nach Anspruch 5 oder 6, **dadurch gekennzeichnet**, daß die Breite (d) der Blechstreifen zwischen 10 % und 30 % der lichten Weite (c) der Schächte (4) beträgt.

8. Lagergestell nach Anspruch 5, **dadurch gekennzeichnet,** daß zweite Verbindungselemente (28) mit kreuzförmigem Profil vorgesehen sind, die mit jeder der einander zugeordneten Seitenwände (44a, 45a und 47 b bzw. 46b) verschweißt sind.

9. Lagergestell nach Anspruch 5 oder 8, **dadurch gekennzeichnet**, daß Verbindungselemente (22, 26, 28) vorgesehen sind, die an ihren in einer Richtung von außen axial einwärts in das Innere der Schächte hineinragenden Enden verjüngt zulaufen.

10. Lagergestell nach einem der vorhergehenden Ansprüche, **dadurch gekennzeichnet**, daß die Schächte (4) aus austenitischem Borstahl mit einem Borgehalt bis 2 % und die Verbindungselemente (20, 22, 26, 28) aus weichem austenitischen Stahl bestehen, dessen Kohlenstoffgehalt weniger als 0,1 % beträgt.

11. Lagergestell nach Anspruch 10, **dadurch gekennzeichnet**, daß die Wandstärke der Verbindungselemente (20, 22, 26, 28) niedriger ist als die Wanstärke der Seitenwände (44 bis 47) der Schächte (4).

12. Lagergestell nach einem der vorhergehenden Ansprüche, **dadurch gekennzeichnet**, daß die Seitenwände (44 bis 47) der Schächte (4) nach außen mit Sicken versehen sind.

13. Lagergestell nach einem der Ansprüche 5 bis 12, **dadurch gekennzeichnet**, daß die Schächte (4, 4a, 4b) und zwischen diesen angeordnete Zwischenräume (5a) für Zwischenpositionen (5) von einer Außenwand (10) umgeben sind und daß die streifenförmigen ersten Verbindungselemente (20) jeweils parallel zum nächstgelegenen Teil der Außenwand (10) des Lagergestells angeordnet sind, so daß sich ein zwiebelschalenartiges Muster ergibt.

14. Lagergestell nach einem der Ansprüche 5 bis 12, **dadurch gekennzeichnet**, daß die Flachseiten der Verbindungselemente (20, 22, 26, 28) unter einem spitzen Winkel ($\beta$) zu der mit ihnen jeweils verschweißten Seitenwand (44 bis 47) angeordnet sind.

15. Lagergestell nach einem der vorhergehenden Ansprüche, **dadurch gekennzeichnet**, daß die Schächte (4) jeweils mit einer Flanschplatte (12) verschweißt sind, die mit der Grundplatte (2) verschraubt ist.

16. Lagergestell nach Anspruch 15, **dadurch gekennzeichnet**, daß zu dessen Lagerung Füße (16) vorgesehen sind, die mit der Grundplatte (2) oder mit an der Grundplatte angeordneten Verstärkungsplatten (14) verschraubt sind.

17. Lagergestell nach Anspruch 16, **dadurch gekennzeichnet**, daß für die Verschraubung der Füße (16) eine Gewindebohrung mit einem Grobgewinde vorgesehen ist, dessen axiales Spiel mindestens 0,5 mm beträgt.

18. Lagergestell nach Anspruch 16, **dadurch gekennzeichnet**, daß der Fuß (16) einen Gewindeschaft (15) und eine im Vergleich dazu verbreiterte Basis (17) aufweist, daß sich der Fuß (16) mit seiner Basis (17) auf einer Fußplatte (18) abstützt und daß zwischen der Fußplatte (18) und der Verstärkungsplatte (14) oder der Grundplatte (2) Spanneinrichtungen (19) zum Verspannen der Füße (16) im Grobgewinde nach dem Justieren der horizontalen Lage der Grundplatte (2) angeordnet sind.

19. Lagergestell nach Anspruch 18, **dadurch gekennzeichnet**, daß das Verhältnis zwischen halber Basisbreite (e) des Fußes (16) und Abstand (f) zwischen der Fußplatte (18) und dem Mittelpunkt (M) der Gewindebohrung größer ist als der Haftreibungskoeffizient (μ) zwischen Fußplatte (18) und dem Boden (30) des Lagerbeckens.

**Claims**

1. Storage rack for reactor fuel elements having the following features:
   a) several shafts (4) with a substantially rectangular cross section are fastened to a base plate (2);
   b) the shafts (4) stand upright on the base plate (2) and are arranged in each case diagonally opposite each other in chessboard fashion;
   c) at least some of the shafts (4) lying diagonally opposite each other are connected to each other in each case along their longitudinal edges (42), which adjoin each other with lateral displacement (S1, S2), by way of at least two connection elements (20, 26) which bridge a gap (S) formed by the lateral displacement (S1, S2), whereby there are associated with the respective pair of longitudinal edges (42a, 42b):
   d) at least a first connection element (20) with a high degree of rigidity in each case in a first direction (30 and 36) parallel to the base plate (2) and
   e) at least a second connection element (26) with a high degree of rigidity in each case in a second direction (36 and 30) parallel to the base plate (2).

2. Storage rack according to claim 1, characterized in that there is an angle (α) between 70° and 90° between the first direction (30) and the second direction (36).

3. Storage rack according to claim 1 or 2, characterized in that in the lower region (6) of the shafts (4) first connection elements (20) are provided which are in each case welded to a side wall (44a) of a shaft (4a) and to a side wall (46b) of an opposite shaft (4b) associated with the side wall (44a), and in the upper region (8) of the shafts (4) second connection elements (26) are provided, which are welded at least to the other side walls (45a, 47b), associated with each other, of the shafts (4a, 4b) opposite each other.

4. Storage rack according to claim 3, characterized in that the length (a) of the lower region (6) provided with first connection elements (20) amounts to at least three quarters of the entire height (a + b) of the shafts (4).

5. Storage rack according to claim 3 or 4, characterized in that strips are provided as first connection elements (20) and are arranged between the longitudinal edges (42a, 42b) of the shafts (4a, 4b) lying opposite each other and are welded to their side walls (44a, 46b) which are parallel to each other.

6. Storage rack according to claim 5, characterized in that the first connection elements (20) extend over the entire height (a + b) of the shafts (4) and in the upper region (8) are provided with a slot (21) to incorporate a second, likewise strip-shaped connection element (26).

7. Storage rack according to claim 5 or 6, characterized in that the width (d) of the strips amounts to between 10% and 30% of the inner width (c) of the shafts (4).

8. Storage rack according to claim 5, characterized in that second connection elements (28) with a cross-shaped profile are provided, which are welded to each of the side walls (44a, 45a and 47b or 46b) associated with each other.

9. Storage rack according to claim 5 or 8, characterized in that connection elements (22, 26, 28) are provided which become narrower at their ends which project in one direction from the outside axially inwards into the interior of the shafts.

10. Storage rack according to one of the preceding claims, characterized in that the shafts (4) consist of austenitic boron steel with a boron content of up to 2% and the connection elements (20, 22, 26, 28) consist of soft austenitic steel, the carbon content of which amounts to less than 0.1%.

9

11. Storage rack according to claim 10, characterized in that the wall thickness of the connection elements (20, 22, 26, 28) is less than the wall thickness of the side walls (44 to 47) of the shafts (4).

12. Storage rack according to one of the preceding claims, characterized in that the side walls (44 to 47) of the shafts (4) are provided with beads to the outside.

13. Storage rack according to one of claims 5 to 12, characterized in that the shafts (4, 4a, 4b) and spaces (5a) arranged between them for intermediate positions (5) are surrounded by an outer wall (10) and in that the strip-shaped first connection elements (20) are arranged in each case parallel to the next part of the outer wall (10) of the storage rack so that an onion-skin-like pattern results.

14. Storage rack according to one of claims 5 to 12, characterized in that the flat sides of the connection elements (20, 22, 26, 28) are arranged at an acute angle ($\beta$) to the side wall (44 to 47) in each case welded thereto.

15. Storage rack according to one of the preceding claims, characterized in that the shafts (4) are in each case welded to a flange plate (12) which is screwed to the base plate (2).

16. Storage rack according to claim 15, characterized in that feet (16) are provided for its mounting, which are screwed to the base plate (2) or to reinforcing plates (14) arranged on the base plate.

17. Storage rack according to claim 16, characterized in that to screw the feet (16) a threaded bore with a coarse thread is provided, the axial clearance of which amounts to at least 0.5 mm.

18. Storage rack according to claim 16, characterized in that the foot (16) has a threaded shaft (15) and a base (17) widened in comparison therewith, in that the foot (16) is supported with its base (17) on a bearing plate (18) and in that between the bearing plate (18) and the reinforcing plate (14) or the base plate (2) tightening devices (19) are arranged in order to brace the feet (16) in the coarse thread after the adjustment of the horizontal position of the base plate (2).

19. Storage rack according to claim 18, characterized in that the ratio between half the base width (e) of the foot (16) and the spacing (f) between the bearing plate (18) and the centre point (M) of the threaded bore is greater than the static friction coefficient ($\mu$) between the bearing plate (18) and the floor (30) of the storage vessel.

**Revendications**

1. Râtelier de stockage pour assemblages de combustible nucléaire avec les caractéristiques suivantes:
   a) Plusieurs gaines (4) à section en substance rectangulaire, sont fixées sur une plaque de base (2);
   b) les gaines (4) sont droites sur la plaque de base (2) et sont disposées en forme d'échiquier à chaque fois diagonalement opposées l'une à l'autre;
   c) une partie au moins des gaines (4) diagonalement opposées est à chaque fois reliée à une autre le long de ses bords longitudinaux (42) contigus avec un déport (S1,S2) par au moins deux éléments de liaison (20, 26) qui enjambent une fente formée par le déport (S1,S2) ; à chaque paire de bords longitudinaux (42a, 42b) étant attribué respectivement:
   d) au moins un premier élément de liaison (20) de grande rigidité dans une première direction (36 ou 30) parallèle à la plaque de base (2) et
   e) au moins un deuxième élément de liaison (26) de grande rigidité dans une deuxième direction (36 ou 30) parallèle à la plaque de base (2).

2. Râtelier de stockage selon la revendication 1, **caractérisé** en ce qu'un angle ($\alpha$) entre 70° et 90° est prévu entre la première direction (30) et la deuxième direction (36).

3. Râtelier de stockage selon la revendication 1 ou 2, **caractérisé** en ce que dans la zone inférieure (6) des gaines (4) sont prévus les premiers éléments de liaison (20) qui sont respectivement soudés à une paroi latérale (44a) d'une gaine (4a) et à une paroi latérale (46b) qui lui est attribuée, d'une gaine opposée (4b) et que dans la zone supérieure (8) des gaines (4) sont prévus les deuxièmes éléments de liaison (26) qui

10

sont au moins soudés aux autres parois latérales (45a, 47b) attribuées à l'une et à l'autre des gaines (4a, 4b) mutuellement opposées l'une à l'autre.

4.  Râtelier de stockage selon la revendication 3, **caractérisé** en ce que la longueur (a) de la zone inférieure munie des premiers éléments de liaison (20) comprend au moins les trois quarts de la hauteur totale (a + b) des gaines (4).

5.  Râtelier de stockage selon la revendication 3 ou 4, **caractérisé** en ce que des bandes de tôle sont prévues comme premiers éléments de liaison (20), celles-ci étant disposées entre les bords longitudinaux (42a, 42b) des gaines (4a, 4b) opposées l'une à l'autre et soudées à leurs parois latérales parallèles l'une à l'autre.

6.  Râtelier de stockage selon la revendication 5, **caractérisé** en ce que les premiers éléments de liaison (20) s'étendent sur toute la longueur (a + b) des gaines (4) et sont munis dans la zone supérieure (8) d'une fente (21) destinée à recevoir un deuxième élément de liaison (26) également en forme de bande.

7.  Râtelier de stockage selon la revendication 5 ou 6, **caractérisé** en ce que la largeur (d) des bandes de tôle comprend entre 10% et 30% de l'ouverture libre (c) des gaines (4).

8.  Râtelier de stockage selon la revendication 5, **caractérisé** en ce que sont prévus des seconds éléments de liaison (28) à profil cruciforme qui sont soudés à chacune des parois latérales réciproquement attribuées (44a, 45a et 47b ou 46b).

9.  Râtelier de stockage selon la revendication 5 ou 8, **caractérisé** en ce que sont prévus des éléments de liaison (22, 26, 28), qui se terminent en se rétrécissant à leurs extrémités, pénétrant à l'intérieur des gaines dans un sens allant axialement de l'extérieur vers l'intérieur.

10. Râtelier de stockage selon l'une quelconque des revendications précédentes, **caractérisé** en ce que les gaines (4) sont en acier austénitique au bore d'une teneur de bore allant jusqu'à 2% et les éléments de liaison (20, 22, 26, 28) en acier austénitique doux dont la teneur en carbone est inférieure à 0,1%.

11. Râtelier de stockage selon la revendication 10, **caractérisé** en ce que l'épaisseur de paroi des éléments de liaison (20, 22, 26, 28) est plus faible que l'épaisseur de paroi des parois latérales (44 à 47) des gaines (4).

12. Râtelier de stockage selon l'une des revendications précédentes, **caractérisé** en ce que les parois latérales (44 à 47) des gaines (4) sont dotées de moulures vers l'extérieur.

13. Râtelier de stockage selon l'une des revendications 5 à 12, **caractérisé** en ce que les gaines (4, 4a, 4b) et des espaces intermédiaires (5a) aménagés entre celles-ci pour les positions intermédiaires (5), sont entourés d'une paroi extérieure (10) et que les premiers éléments de liaison en forme de bande (20) sont à chaque fois disposés parallèlement à la partie la plus proche de la paroi extérieure (10) du râtelier de stockage de manière à obtenir un modèle de type pelure d'oignon.

14. Râtelier de stockage selon l'une des revendications 5 à 12, **caractérisé** en ce que les côtés plats des éléments de liaison (20, 22, 26, 28) sont disposés sous un angle aigu ($\beta$) par rapport à la paroi latérale (44 à 47) à laquelle ils sont respectivement soudés.

15. Râtelier de stockage selon l'une quelconque des revendications précédentes, **caractérisé** en ce que les gaines (4) sont soudées à chaque fois à une plaque à bride (12) qui est boulonnée à la plaque de base (2).

16. Râtelier de stockage selon la revendication 15, **caractérisé** en ce que pour la mise en place de stockage de celui-ci, on a prévu des pieds (16) qui sont boulonnés à la plaque de base (2) ou aux plaques de renfort (14) montées sur la plaque de base.

17. Râtelier de stockage selon la revendication 1 ou 2, **caractérisé** en ce que pour visser les pieds (16) on a prévu un alésage fileté avec un filetage à pas gros dont le jeu axial est au minimum de 0,5 mm.

18. Râtelier de stockage selon la revendication 16, **caractérisé** en ce que le pied (16) présente un axe fileté (15) et une base (17) comparativement élargie à cet effet, que le pied (16) s'appuie avec sa base (17) sur une plaque de pied (18) et qu'entre la plaque de pied (18) et la plaque de renfort (14) ou la plaque de base (2), sont montés des dispositifs de serrage (19) pour serrer les pieds (16) dans le filetage à pas gros après réglage de la position horizontale de la plaque de base (2).

19. Râtelier de stockage selon la revendication 18, **caractérisé** en ce que le rapport existant entre la demi largeur de base (e) du pied (16) et l'espace (f) entre la plaque de pied (18) et le centre (M) de l'alésage fileté, est supérieur au coefficient de frottement statique ($\mu$) entre la plaque de pied (18) et le fond (30) du réservoir de stockage.

FIG 1

EP 0 537 615 B1

FIG 2

14

FIG 3

FIG 4

FIG 5

EP 0 537 615 B1

EP 0 537 615 B1

FIG 6

FIG 7

17

FIG 8

EP 0 537 615 B1